# EUROPEAN PATENT SPECIFICATION

(11) **EP 3 206 361 B1**
(45) Date of publication and mention of the grant of the patent: **20.02.2019**
(21) Application number: 16204415.0
(22) Date of filing: 15.12.2016
(51) Int. Cl.: H04L 29/06, H04L 12/40

(54) **CONTROLLER AREA NETWORK (CAN) MESSAGE FILTERING**
NACHRICHTENFILTERUNG FÜR CONTROLLER-AREA-NETWORK (CAN)
FILTRAGE DES MESSAGES DE RÉSEAU CAN

(30) Priority: 12.02.2016 US 201615042318
(43) Date of publication of application: 16.08.2017
(73) Proprietor: NXP USA, Inc., Austin TX 78735 (US)
(72) Inventor: VAN DER MAAS, Marno Herman Josephus, 5656 AG Eindhoven (NL)
(74) Representative: Pomper, Till

(56) References cited:
- WO-A1-2013/144962
- WO-A1-2015/151418
- US-A1- 2011 125 855
- US-A1- 2014 032 800
- US-A1- 2015 358 351
- TSUTOMU MATSUMOTO ET AL: "A Method of Preventing Unauthorized Data Transmission in Controller Area Network", 2012 IEEE 75TH VEHICULAR TECHNOLOGY CONFERENCE (VTC SPRING 2012) : YOKOHAMA, JAPAN, 6 - 9 MAY 2012, IEEE, PISCATAWAY, NJ, 6 May 2012 (2012-05-06), pages 1-5, XP032202711, DOI: 10.1109/VETECS.2012.6240294 ISBN: 978-1-4673-0989-9

## Description

### BACKGROUND

Controller area network (CAN) bus is a message-based communications bus protocol that is often used within automobiles. The CAN bus protocol is used to enable communications between various electronic control units (ECUs), such as an engine control module (ECM), a power train control module (PCM), airbags, antilock brakes, cruise control, electric power steering, audio systems, windows, doors, mirror adjustment, battery and recharging systems for hybrid/electric cars, and many more. The data link layer of the CAN protocol is standardized as International Standards Organization (ISO) 11898.

One growing concern with in-vehicle networks, such as in-vehicle networks that use the CAN bus protocol, is network security. It is possible for a rogue device connected to an ECU to be able to read messages not meant for that ECU and perform rogue operations through the CAN network.

WO2013/144962 describes a CAN controller for use in vehicle electronics that includes a security system to filter incoming messages. WO2015/15148 describes a communication system that can review transmitted frames to determine if they meet prescribed conditions. US2014/032800 describes a vehicle message filter system with a transmit filter to determine if outgoing messages should be sent onto as communication bus. 2012 IEEE 75th vehicular conference, 6 May 2012 p1-5 describes a CAN controller that can detect and override unauthorized messages. US2015/358351 describes a network device for processing received data, wherein the data includes identifier details.

### SUMMARY

This summary is provided to introduce a selection of concepts in a simplified form that are further described below in the Detailed Description. This summary is not intended to identify key features or essential features of the claimed subject matter, nor it is intended to be used to limit the scope of the claimed subject matter.

In one embodiment, a Controller Area Network (CAN) device is disclosed. The CAN device includes a CAN controller and a transceiver coupled to the CAN controller. The transceiver includes a transmitter and a receiver coupled to a CAN bus interface. The CAN device also includes a security module coupled to the receiver. The security module includes an identifier table and a receiver controller. The security module is configured to receive an incoming CAN message, retrieve an identifier from the incoming CAN message, search the identifier table for the identifier and alter the incoming message based on a result of the search.

In some embodiments, the identifier table includes a list of identifiers, wherein if the identifier in the incoming CAN message matches one in the list, the security module is configured to send the incoming message to the CAN controller without altering the incoming CAN message. In other embodiments, the identifier table includes a list of identifiers, wherein if the identifier in the incoming CAN message does not match one in the list, the security module is configured to send the incoming message to the CAN controller without altering the incoming CAN message.

In some embodiments, the altering of the incoming CAN message includes changing bits in data part of the incoming CAN message to a sequence of zeros and transmitting the error message to the CAN protocol controller. The altering of the incoming CAN message may include changing the incoming CAN message to an error message and transmitting the error message to the CAN protocol controller.

In some other embodiments, the altering of the incoming CAN message includes generating a new CAN message that is equal in length to the incoming CAN message and transmitting the new CAN message to the CAN protocol controller.

In some embodiments, the security module is coupled to the transmitter and configured to send a CAN error message to the transmitter after altering the incoming CAN message. In one embodiment, the security module is located inside the transceiver. In another embodiment, the security module is located outside of the transceiver, between the transceiver and the CAN protocol controller.

In another embodiment, a method of altering an incoming Controller Area Network (CAN) message in a CAN device is disclosed. The method includes receiving the incoming CAN message at a receiver inside a transceiver, transmitting the incoming CAN message to a security module that includes a list of identifiers. Retrieving an identifier from the incoming CAN message and searching through the list of identifiers for the identifier and based on a result of the searching, altering the incoming CAN message.

In yet another embodiment, a microcontroller including programming instructions which when executed by a processor inside the microcontroller performs an operation, the operation includes receiving the incoming CAN message at a receiver inside a transceiver, transmitting the incoming CAN message to a security module that includes an a list of identifiers, retrieving an identifier from the incoming CAN message, and searching through the list of identifiers for the identifier and based on a result of the searching, altering the incoming CAN message.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 illustrates a CAN network that includes multiple CAN nodes connected to a CAN bus in accordance with one or more embodiments.
Fig. 2 depicts an expanded view of one CAN node from Fig. 1 in accordance with one or more embodiments.
Fig. 3 illustrates a CAN transceiver in accordance with one or more embodiments.
Fig. 4 illustrates a CAN frame or message structure in accordance with one or more embodiments.
Fig. 5 depicts a method for filtering CAN network messages in accordance with one or more embodiments.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

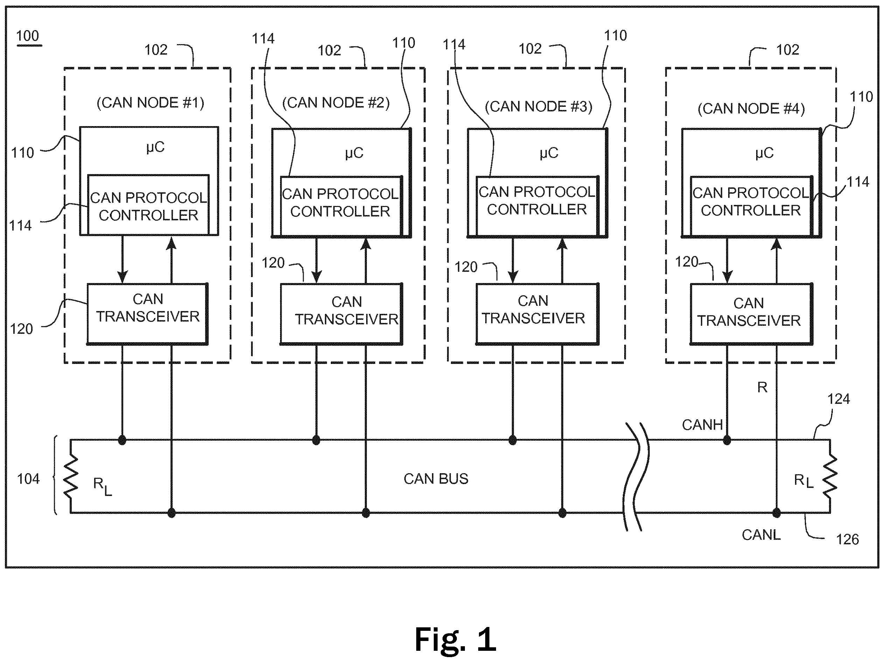

Fig. 1 depicts a CAN network 100 that includes multiple CAN nodes 102, also referred to as "ECUs," each connected to a CAN bus 104. In one or more embodiments, each CAN node includes a microcontroller 110 having an embedded CAN protocol controller 114 and a CAN transceiver 120. The microcontroller 110 also includes components such a memory and a processor (not shown). The microcontrollers are typically connected to at least one device (not shown) such as a sensor, an actuator, or some other control device and are programmed to determine the meaning of received messages and to generate appropriate outgoing messages. The microcontrollers, also referred to as host processors, hosts, or digital signal processors (DSPs), are known in the field. In an embodiment, the host supports application software that interacts with the CAN protocol controller 114.

The CAN protocol controllers 114, which can be embedded within the microcontrollers 110 or external to the microcontrollers 110 (e.g., a separate IC device), implement data link layer operations as is known in the field. For example, in receive operations, a CAN protocol controller 114 stores received serial bits from the transceiver 120 until an entire message is available for fetching by the microcontroller 110. The CAN protocol controller 114 can also decode the CAN messages according to the standardized frame format of the CAN protocol. In transmit operations, the CAN protocol controller 114 receives messages from the microcontroller 110 and transmits the messages as serial bits in the CAN frame format to the CAN transceiver 120.

The CAN transceivers 120 are located between the microcontrollers 110 and the CAN bus 104 and implement physical layer operations (also referred to as the "PHY"). For example, in receive operations, a CAN transceiver 120 converts analog differential signals from the CAN bus 104 to serial digital signals that the CAN protocol controller 114 can interpret. The CAN transceiver 120 may also protect the CAN protocol controller 114 from extreme electrical conditions on the CAN bus 102, e.g., electrical surges. In transmit operations, the CAN transceiver 120 converts serial digital bits received from the CAN protocol controller 114 into analog differential signals that are sent on the CAN bus 104.

The CAN bus 104 carries analog differential signals and includes a CAN high (CANH) bus line 124 and a CAN low (CANL) bus line 126. The CAN bus 104 is known in the field.

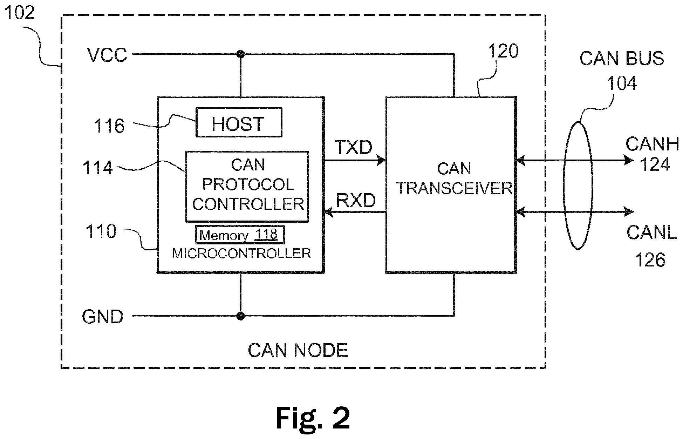

Fig. 2 depicts one CAN node 102 in accordance with one or more embodiments. The microcontroller 110 may include a host 116, which may be, for example, a software application that is stored in a memory 118 of the microcontroller 110 and executed by processing circuits of the microcontroller 110. The microcontroller 110 and the CAN transceiver 120 of the CAN node 102 are connected between a supply voltage, Vcc, and ground, GND. Data communicated from the microcontroller 110 to the CAN transceiver 120 is identified as transmit data (TXD) and data communicated from the CAN transceiver 120 to the microcontroller 110 is referred to as receive data (RXD). Throughout the description, TXD is carried on a TXD path and RXD is carried on an RXD path. Data is communicated to and from the CAN bus 104 via the CANH and CANL bus lines 124 and 126, respectively.

The CAN protocol controller 114 can be configured to support the CAN normal mode or the CAN flexible data rate mode. As used herein, "CAN normal mode" (also referred to as "Classical CAN mode") refers to frames that are formatted according to the ISO 11898-1 standard and "CAN FD mode" refers to frames that are formatted according to the emerging ISO/Draft International Standard (DIS) 11898-1 standard, or an equivalent thereof.

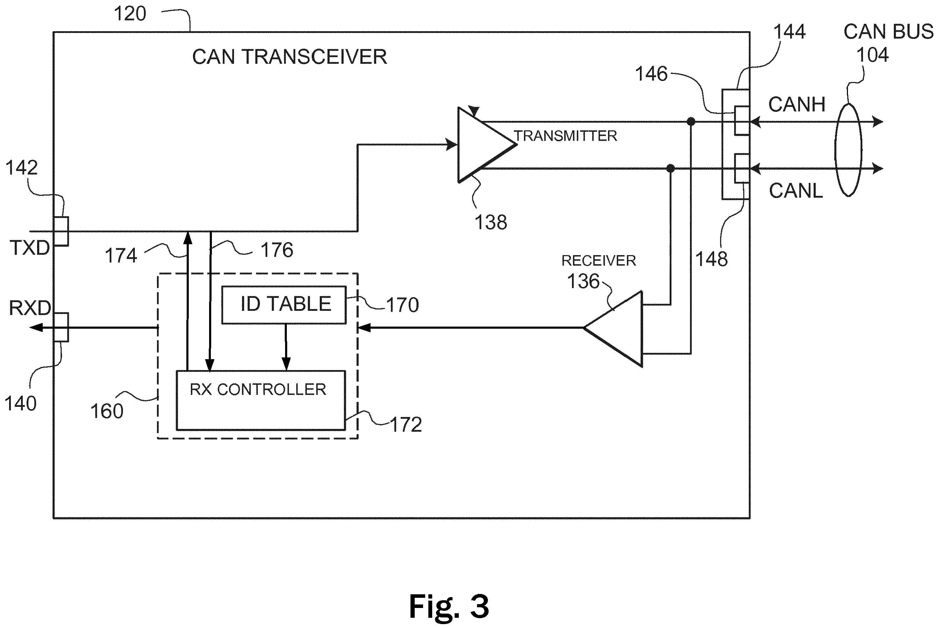

Fig. 3 illustrates an embodiment of a CAN transceiver 120 that includes a security module 160 that includes an identifier (ID) table module 170 and a receiver (RX) controller 172 that is configured to cause altering of an incoming message based on the content of the ID table module 170. The CAN transceiver 120 includes a receiver 136 (also referred to as the "receiver PHY"), a transmitter 138 (also referred to as the "transmitter PHY"), an RXD interface 140, a TXD interface 142, and a CAN bus interface 144 having a CANH bus interface 146 and a CANL bus interface 148. Incoming CAN traffic (e.g., RXD) that is received at the CAN bus interface 144 is passed to the RXD interface 140 via the receiver and the RX controller 172, and outgoing CAN traffic (e.g., TXD) that is received at the TXD interface 142 is transmitted out the CAN bus interface 144 via the transmitter PHY. The outgoing CAN traffic may also be produced by the RX controller 172 in some conditions as described later in this document. In an embodiment, the CAN transceiver 120 is a discrete stand alone integrated circuit (IC) device that can be connected to a microcontroller IC device on a printed circuit board (PCB). In some embodiments, the security module 160 may be implemented in software. The security module 160 collects serial bits of an incoming message from the receiver 136. The security module 160 may also be coupled to the transmission path, as shown by links 174 and 176 Note that, links 174 and 176 are logical links. Physically, a duplex link between the transmission path and the security module 160 may suffice.

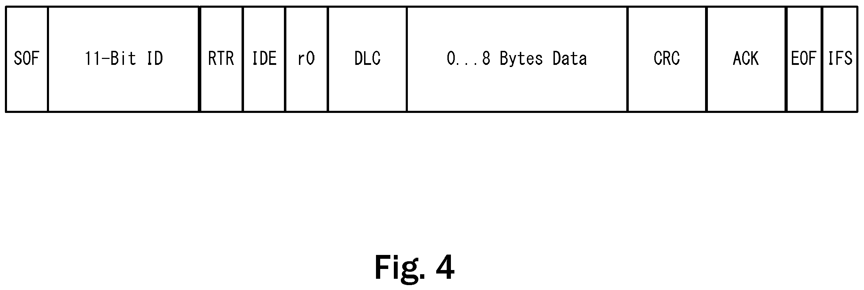

Fig. 4 shows bit fields of Standard Controller Area Network (CAN) protocol. The CAN protocol is well known, hence detail discussion of the CAN protocol is being omitted so as not to obfuscate this disclosure. SOF is the single dominant start of frame bit that marks the start of a message and is used for synchronization of the CAN nodes on the CAN bus 104 after being idle. 11-Bit ID is the standard CAN 11-bit identifier that establishes the priority of the message. The lower the binary value, the higher its priority. Single Remote Transmission Request (RTR) bit is dominant when information if required from another node. All nodes receive the request, but the identifier determines the specified node. The responding data is also received by all nodes and used by any node interested. A dominant single identifier extension (IDE) bit means that a standard CAN identifier with no extension is being transmitted. Reserved bit (r0) is reserved for future CAN standard amendment. The 4-bit data length code (DLC) contains the number of bytes of data being transmitted. Up to 64 bits of application data may be contained in one CAN message. A 16-bit (15 bits plus delimiter) cyclic redundancy check (CRC) contains the checksum (number of bits transmitted) of the preceding application data for error detection.

Every node receiving an accurate message overwrites this recessive bit ACK in the original message with a dominant bit, indicating an error free message has been sent. Should a receiving node detect an error and leave this bit recessive, it discards the message and the sending node repeats the message after re-arbitration. In this way, each node acknowledges (ACK) the integrity of its data. ACK is 2 bits, one is the acknowledgement bit and the second is a delimiter.

The end-of-frame (EOF) is a 7-bit field that marks the end of a CAN frame or message and disables bit-stuffing, indicating a stuffing error when dominant. When 5 bits of the same logic level occur in succession during normal operation, a bit of the opposite logic level is stuffed into the data.

A 7-bit interframe space (IFS) contains the time required by a controller to move a correctly received frame to its proper position in a message buffer area.

The message format for Extended CAN is similar to Standard CAN, with a few differences. Substitute Remote Request (SRR) bit replaces the RTR bit. A recessive bit in the identifier extension (IDE) indicates that more identifier bits follow. The 18-bit extension follows IDE. Following the RTR and r0 bits, an additional reserve bit has been included ahead of the DLC bit.

The embodiments described herein are applicable to both Standard and Extended CAN message formats. Bus access in CAN is event driven and takes place randomly. If two nodes try to occupy the CAN bus 104 simultaneously, access is implemented with a nondestructive, bit-wise arbitration. Nondestructive means that the node winning arbitration just continues on with the message, without the message being destroyed or corrupted by another node. The allocation of priority to messages is in the identifier. The lower the binary message identifier number, the higher its priority. An identifier consisting entirely of zeros is the highest priority message on a CAN network because it holds the CAN bus 104 dominant the longest. Therefore, if two nodes begin to transmit simultaneously, the node that sends a last identifier bit as a zero (dominant) while the other nodes send a one (recessive) retains control of the CAN bus 104 and goes on to complete its message. A dominant bit always overwrites a recessive bit on the CAN bus 104.

Moving back to Fig. 3 again. The security module 160 receives an incoming message from the receiver 136. In some embodiments, the incoming message is in the form of serial bits when it arrives at the security module 160. The security module 160 collects the incoming bits and formats the entire message frame according to the CAN frame structure shown in Fig. 4. The RX controller 172 check if the identifier in the incoming message exists in the ID table 170. In some embodiments, the ID table 170 may contain a list of identifiers that the CAN protocol controller 114 or the host 116 is permitted to receive. In some other embodiments, the ID table 170 may contain a list of identifiers that the CAN protocol controller 114 or the host 116 is not permitted to receive.

As noted above, all messages on the CAN bus 104 are received by all CAN nodes 102 on the CAN network. When the CAN controller 114 or the host 116 receive a message, it checks the identifier and discard the message if the message is not meant for that CAN node 102. However, for example, a host 116 that is compromised through a device connected thereto may not discard the message and can effectively "spy" on the entire network. To prevent any such potential breach of security of the CAN network, the security module 160, after looking up the ID table 170, may alter the incoming message to a state that contains no data. Ideally, the security module 160 should simply disregard such messages and not transmit them to the CAN protocol controller 114 or the host 116. However, doing so would render that CAN node 102 incapable of participating in the CAN bus arbitration. So to solve this challenge, the security module 160 changes the data in the incoming message to zeros. However, to keep the CAN node 102 capable of continuing to participate in arbitration and stay synchronized with the CAN bus 104, the message length is kept the same as the original incoming message. For example, if the original incoming message was x millisecond long, the altered message is formed to have the length of x millisecond.

In some embodiments, the security module 160 replaces the data in the original incoming message such that the altered message become indicative of a bus error message (e.g., six consecutive low bits). The CAN protocol specifies how the CAN node 102 should handle error messages. In short, upon receiving a bus error message, the CAN protocol controller 114 sends an error frame to the CAN bus 104. This way, the CAN Node 102 stays synchronized with the CAN bus 104 yet the CAN node 102 does not see the real messages that were not meant for it.

However, sending too many error messages to the CAN protocol controller 114 may cause the CAN protocol controller 114 to enter into an error passive mode and this may lead to the CAN protocol controller 114 not sending error frame to the CAN bus 104. Hence, in some embodiments, the security module 160 continues to send error frames back to the CAN bus 104. In some embodiments, when the CAN protocol controller 114 is in error passive mode, the CAN protocol controller 114 stops sending notifications of transmittal errors back to the CAN bus 104. In some embodiments, when the CAN protocol controller 114 is in error passive mode, the security module 160 will check if the data put on the TXD 142 is the same as the data received by the receiver 136. If not, the security module 160 will output to the transmission path the error message that the CAN protocol controller 114 was expected to do if the CAN protocol controller 114 was not in the error passive mode.

The identifiers in the ID table 170 are typically stored by a vendor of the CAN node 102 in such a way that the ID table 170 cannot be altered by an external device connected to the CAN node 102. As noted above, the list may be a list of identifiers that the CAN protocol controller 114 or the host 116 is allowed to receive. Alternatively, the list may include identifiers that the CAN protocol controller 114 or the host 116 is not allowed to receive.

In an embodiment, the security module 160 is implemented in hardware circuits that are fabricated on the same substrate as the circuits that constitute the CAN receiver 136. Hardware circuit may include, for example, transistors and diodes fabricated using CMOS technology as is known in the field. In some embodiments, the security module 160 may be outside the transceiver 120 and may be placed between the transceiver 120 and the CAN protocol controller 114. The security module 160 may also be implemented in a microcontroller (not shown) using a programming instructions to perform method of altering an incoming CAN message as described herein. In some other embodiments, the security module 160 may be implemented through programming instructions that reside in the memory 118 and executed by the microcontroller 110. Such implementation is protected inside the memory using software protection techniques such that the programming instructions and the ID table 170 cannot be altered by a device that is connected to the CAN node 102.

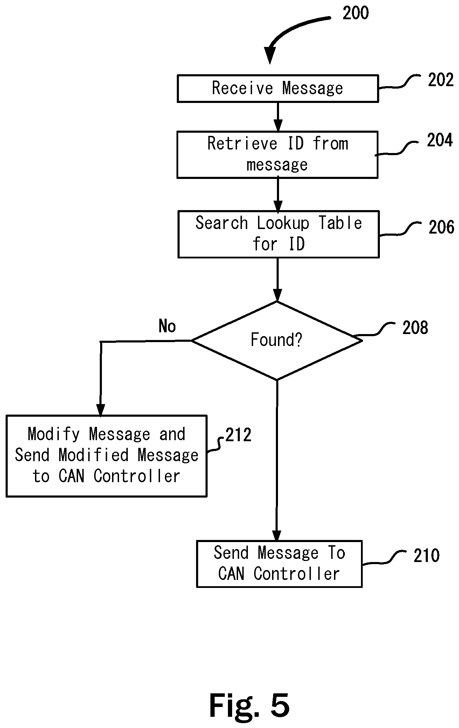

Figure 5 illustrates a method 200 for filtering CAN network messages according to the identifiers stored in the ID table 170. Accordingly, at step 202, a CAN message is received by the receiver 136. The received CAN message is transferred to the security module 160. At step 204, the security module 160 retrieves the identifier from the received CAN message. At step 206, the ID table 170 is searched for the identifier. At decision step 208, if the identifier is found, the received CAN message is transmitted to the CAN protocol controller 114 or to the host 116. However, if the identifier is not found, the security module 160 alters the received CAN message to an error message and transmits the altered CAN message to the host 116 or the CAN protocol controller 114.

In an embodiment, the above-described security mechanism can be implemented in a CAN device such as a CAN transceiver IC device, a microcontroller IC device, or an IC device that includes both a CAN transceiver and a microcontroller. In an embodiment, the above-described embodiments are applicable to CAN, CAN-FD, and ISO11898 compliant networks as well as to other network protocols that are often used in vehicles such as Local Interconnect Network (LIN) and FLEXRAY protocols.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software
elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto.

## Claims

1. A Controller Area Network, CAN, device (102), comprising:
a CAN controller (114);
a transceiver (120) coupled to the CAN controller (114), wherein the transceiver includes a transmitter (138) and a receiver (136) coupled to a CAN bus interface (144); and
a security module (160) coupled to the receiver, wherein the security module includes an identifier table (170) and a receiver controller (172), wherein the security module is configured to receive an incoming CAN message, retrieve an identifier from the incoming CAN message, search the identifier table for the identifier, **characterized in that** if the identifier is not found in the identifier table (170), the incoming CAN message is modified and the modified incoming CAN message is sent to the receiver controller, if the identifier is found in the identifier table, the incoming CAN message is sent to the receiver controller (172) .

2. The CAN device (102) of claim 1, wherein the identifier table (170) includes a list of identifiers, wherein if the identifier in the incoming CAN message matches one in the list, the security module (160) is configured to send the incoming CAN message to the CAN controller (114) without altering the incoming CAN message.

3. The CAN device (102) of claim 2, wherein if the identifier in the incoming CAN message does not match one in the list, the security module (160) is configured to send the incoming CAN message to the CAN controller (114) with altering the incoming CAN message.

4. The CAN device (102) of any one of the claims 1 to 3, wherein the altering of the incoming CAN message includes changing bits in a data part of the incoming CAN message to a sequence of zeros and transmitting an error message to the CAN controller (114).

5. The CAN device (102) of any one of the claims 1 to 4, wherein the altering of the incoming CAN message includes changing the incoming CAN message to an error message and transmitting the error message to the CAN controller (114).

6. The CAN device (102) of any one of the claims 1 to 5, wherein the altering of the incoming CAN message includes generating a new CAN message that is equal in length to the incoming CAN message and transmitting the new CAN message to the CAN controller (114).

7. The CAN device (102) of any one of the claims 1 to 6, wherein the security module (160) is coupled to the transmitter (138) and configured to send a CAN error message to the transmitter (138) after altering the incoming CAN message.

8. A method of altering an incoming Controller Area Network, CAN, message in a CAN device (102), the method comprising:
receiving (202) the incoming CAN message at a receiver (136) inside a transceiver (120);
transmitting the incoming CAN message to a security module (160) that includes a list of identifiers;
retrieving (204) an identifier from the incoming CAN message; and
searching (206) through the list of identifiers for the identifier, **characterized in that** if the identifier is not found in the list of identifiers, the incoming CAN message is modified and the modified incoming CAN message is sent to a receiver controller (172), if the identifier is found in the list of identifiers, the incoming CAN message is sent to the receiver controller (172) .

9. The method of claim 8, wherein the identifier table includes a list of identifiers, wherein if the identifier in the incoming CAN message matches one in the list, the method comprises sending the incoming CAN message to the CAN controller (114) without altering the incoming CAN message.

10. The method of claim 8, wherein if the identifier in the incoming CAN message does not match one in the list, the method comprises sending the incoming CAN message to the CAN controller (114) with altering the incoming CAN message.

11. The method of any one of the claims 8 to 10, wherein the altering of the incoming CAN message includes changing bits in data part of the incoming CAN message to a sequence of zeros.

12. The method of any one of the claims 8 to 11, wherein the altering of the incoming CAN message includes changing the incoming CAN message to an error message.

13. The method of any one of the claims 8 to 12, wherein the altering of the incoming CAN message includes generating a new CAN message that is equal in length to the incoming CAN message.

14. The method of any one of the claims 8 to 13, further including transmitting a CAN error message to a CAN bus through a transmitter after altering the incoming CAN message.

15. A microcontroller including programming instructions which when executed by a processor inside the microcontroller performs a method according to any one of the claims 8 to 14.

## Patentansprüche

1. Eine Controller Area Network, CAN, Vorrichtung (102), aufweisend:
einen CAN Controller (114);
einen Sende-Empfänger (120), der an den CAN Controller (114) gekoppelt ist, wobei der Sende-Empfänger umfasst einen Sender (138) und einen Empfänger (136), die an eine CAN Bus Schnittstelle (144) gekoppelt sind; und
ein Sicherheitsmodul (160), das an den Empfänger gekoppelt ist, wobei das Sicherheitsmodul umfasst eine Kennungstabelle (170) und einen Empfänger Controller (172), wobei das Sicherheitsmodul konfiguriert ist, eine eingehende CAN Nachricht zu empfangen, eine Kennung aus der eingehenden CAN Nachricht abzurufen, in der Kennungstabelle nach der Kennung zu suchen,
**dadurch gekennzeichnet, dass**,
w enn die Kennung in der Kennungstabelle (170) nicht gefunden wird, die eingehende CAN Nachricht modifiziert wird und die modifizierte eingehende CAN Nachricht an den Empfänger Controller gesendet wird,
w enn die Kennung in der Kennungstabelle gefunden wird, die eingehende CAN Nachricht an den Empfänger Controller (172) gesendet wird.

2. Die CAN Vorrichtung (102) gemäß Anspruch 1, wobei die Kennungstabelle (170) eine Liste von Kennungen umfasst, wobei, wenn die Kennung in der eingehenden CAN Nachricht mit einer in der Liste übereinstimmt, das Sicherheitsmodul (160) konfiguriert ist, die eingehende CAN Nachricht an den CAN Controller (114) zu senden, ohne die eingehende CAN Nachricht zu ändern.

3. Die CAN Vorrichtung (102) gemäß Anspruch 2, wobei, wenn die Kennung in der eingehenden CAN Nachricht nicht mit einer in der Liste übereinstimmt, das Sicherheitsmodul (160) konfiguriert ist, die eingehende CAN Nachricht an den CAN Controller (114) zu senden mit Ändern der eingehenden CAN Nachricht.

4. Die CAN Vorrichtung (102) gemäß einem der Ansprüche 1 bis 3, wobei das Ändern der eingehenden CAN Nachricht umfasst ein Verändern von Bits in einem Datenteil der eingehenden CAN Nachricht in eine Abfolge von Nullen und ein Übertragen einer Fehlermeldung an den CAN Controller (114).

5. Die CAN Vorrichtung (102) gemäß einem der Ansprüche 1 bis 4, wobei das Ändern der eingehenden CAN Nachricht umfasst ein Verändern der eingehenden CAN Nachricht in eine Fehlermeldung und ein Übertragen der Fehlermeldung an den CAN Controller (114).

6. Die CAN Vorrichtung (102) gemäß einem der Ansprüche 1 bis 5, wobei das Ändern der eingehenden CAN Nachricht umfasst ein Erzeugen einer neuen CAN Nachricht, die gleich lang ist wie die eingehenden CAN Nachricht, und ein Übertragen der neuen CAN Nachricht an den CAN Protokoll Controller (114).

7. Die CAN Vorrichtung (102) gemäß einem der Ansprüche 1 bis 6, wobei das Sicherheitsmodul (160) gekoppelt ist an den Sender (138) und konfiguriert ist, eine CAN Fehlermeldung an den Sender (138) zu senden nach dem Ändern der eingehenden CAN Nachricht.

8. Ein Verfahren zum Ändern einer eingehenden Controller Area Network, CAN, Nachricht in einer CAN Vorrichtung (102), das Verfahren aufweisend:
Empfangen (202) der eingehenden CAN Nachricht an einem Empfänger (136) innerhalb eines Sende-Empfängers (120);
Übertragen der eingehenden CAN Nachricht an ein Sicherheitsmodul (160), das eine Liste von Kennungen umfasst;
Abrufen (204) einer Kennung aus der eingehenden CAN Nachricht; und
Durchsuchen (206) der Liste von Kennungen nach der Kennung,
**dadurch gekennzeichnet, dass**,
w enn die Kennung nicht in der Liste von Kennungen gefunden wird, die eingehende CAN Nachricht modifiziert wird und die modifizierte CAN Nachricht an einen Empfänger Controller (172) gesendet wird,
w enn die Kennung in der Liste von Kennungen gefunden wird, die eingehende CAN Nachricht an den Empfänger Controller (172) gesendet wird.

9. Das Verfahren gemäß Anspruch 8, wobei die Kennungstabelle eine Liste von Kennungen umfasst, wobei, wenn die Kennung in der eingehenden CAN Nachricht mit einer in der Liste übereinstimmt, das Verfahren aufweisend Senden der eingehenden CAN Nachricht an den CAN Controller (114), ohne die eingehende CAN Nachricht zu ändern.

10. Das Verfahren gemäß Anspruch 8, wobei, wenn die Kennung in der eingehenden CAN Nachricht nicht mit einer in der Liste übereinstimmt, das Verfahren aufweisend Senden der eingehenden Nachricht an den CAN Controller (114) mit Ändern der eingehenden CAN Nachricht.

11. Das Verfahren gemäß einem der Ansprüche 8 bis 10, wobei das Ändern der eingehenden CAN Nachricht umfasst ein Verändern von Bits in einem Datenteil der eingehenden CAN Nachricht in eine Abfolge von Nullen.

12. Das Verfahren gemäß einem der Ansprüche 8 bis 11, wobei das Ändern der eingehenden CAN Nachricht umfasst ein Verändern der eingehenden CAN Nachricht in eine Fehlermeldung.

13. Das Verfahren gemäß einem der Ansprüche 8 bis 12, wobei das Ändern der eingehenden CAN Nachricht umfasst ein Erzeugen einer neuen CAN Nachricht, die gleich lang ist wie die eingehende CAN Nachricht.

14. Das Verfahren gemäß einem der Ansprüche 8 bis 13, ferner umfassend ein Übertragen einer CAN Fehlermeldung an einen CAN Bus durch einen Sender nach dem Ändern der eingehenden CAN Nachricht.

15. Ein Mikrocontroller umfassend Programmieranweisungen, welche, wenn sie von einem Prozessor innerhalb des Mikrocontrollers ausgeführt werden, ein Verfahren gemäß einem der Ansprüche 8 bis 14 durchführen.

## Revendications

1. Dispositif du type Controller Area Network, CAN, (102), comprenant :
un contrôleur CAN (114);
un émetteur-récepteur (120) couplé au contrôleur CAN (114), l'émetteur-récepteur comportant un émetteur (138) et un récepteur (136) couplés à une interface de bus CAN (144) ; et
un module de sécurité (160) couplé au récepteur, le module de sécurité comportant une table d'identifiants (170) et un contrôleur de récepteur (172), le module de sécurité étant configuré pour recevoir un message CAN entrant, extraire un identifiant à partir du message CAN entrant, rechercher l'identifiant dans la table d'identifiants,
**caractérisé en ce que**, si l'identifiant n'est pas localisé dans la table d'identifiants (170), le message CAN entrant est modifié et le message CAN entrant modifié est envoyé au contrôleur de récepteur ; si l'identifiant est localisé dans la table d'identifiants, le message CAN entrant est envoyé au contrôleur de récepteur (172).

2. Dispositif CAN (102) selon la revendication 1, dans lequel la table d'identifiants (170) comporte une liste d'identifiants, le module de sécurité (160) étant configuré pour envoyer le message CAN entrant au contrôleur CAN (114) sans modification du message CAN entrant si l'identifiant dans le message CAN entrant correspond à l'un dans la liste.

3. Dispositif CAN (102) selon la revendication 2, dans lequel, si l'identifiant dans le message CAN entrant ne correspond pas à l'un dans la liste, le module de sécurité (160) est configuré pour envoyer le message CAN entrant au contrôleur CAN (114) avec modification du message CAN entrant.

4. Dispositif CAN (102) selon l'une quelconque des revendications 1 à 3, dans lequel la modification du message CAN entrant comporte le changement de bits dans une partie données du message CAN entrant en une séquence de zéros et la transmission d'un message d'erreur au contrôleur CAN (114).

5. Dispositif CAN (102) selon l'une quelconque des revendications 1 à 4, dans lequel la modification du message CAN entrant comporte le changement du message CAN entrant en un message d'erreur et la transmission du message d'erreur au contrôleur CAN (114).

6. Dispositif CAN (102) selon l'une quelconque des revendications 1 à 5, dans lequel la modification du message CAN entrant comporte la génération d'un nouveau message CAN de longueur égale à celle du message CAN entrant et la transmission du nouveau message CAN au contrôleur CAN (114).

7. Dispositif CAN (102) selon l'une quelconque des revendications 1 à 6, dans lequel le module de sécurité (160) est couplé à l'émetteur (138) et configuré pour envoyer un message d'erreur CAN à l'émetteur (138) suite à la modification du message CAN entrant.

8. Procédé de modification d'un message du type Controller Area Network, CAN, entrant dans un dispositif CAN (102), le procédé comprenant :
la réception (202) du message CAN entrant au niveau d'un récepteur (136) à l'intérieur d'un émetteur-récepteur (120) ;
la transmission du message CAN entrant à un module de sécurité (160) qui comporte une liste d'identifiants ;
l'extraction (204) d'un identifiant à partir du message CAN entrant ; et
la recherche (206) de l'identifiant dans la liste d'identifiants,
**caractérisé en ce que**, si l'identifiant n'est pas localisé dans la liste d'identifiants, le message CAN entrant est modifié et le message CAN entrant modifié est envoyé à un contrôleur de récepteur (172) ; si l'identifiant est localisé dans la liste d'identifiants, le message CAN entrant est envoyé au contrôleur de récepteur (172).

9. Procédé selon la revendication 8, dans lequel la table d'identifiants comporte une liste d'identifiants, le procédé comprenant en outre l'envoi du message CAN entrant au contrôleur CAN (114) sans modification du message CAN entrant si l'identifiant dans le message CAN entrant correspond à l'un dans la liste.

10. Procédé selon la revendication 8, comprenant en outre, si l'identifiant dans le message CAN entrant ne correspond pas à l'un dans la liste, le procédé comprenant l'envoi du message CAN entrant au contrôleur CAN (114) avec modification du message CAN entrant.

11. Procédé selon l'une quelconque des revendications 8 à 10, dans lequel la modification du message CAN entrant comporte le changement de bits dans une partie données du message CAN entrant en une séquence de zéros.

12. Procédé selon l'une quelconque des revendications 8 à 11, dans lequel la modification du message CAN entrant comporte le changement du message CAN entrant en un message d'erreur.

13. Procédé selon l'une quelconque des revendications 8 à 12, dans lequel la modification du message CAN entrant comporte la génération d'un nouveau message CAN de longueur égale à celle du message CAN entrant.

14. Procédé selon l'une quelconque des revendications 8 à 13, comportant en outre la transmission d'un message d'erreur CAN à un bus CAN au moyen d'un émetteur suite à la modification du message CAN entrant.

15. Microcontrôleur comportant des instructions de programmation qui, une fois exécutées par un processeur à l'intérieur du microcontrôleur, mettent en oeuvre un procédé selon l'une quelconque des revendications 8 à 14.
